# FASCICULE DE BREVET EUROPEEN

(11) **EP 1 672 726 B1**
(45) Date de publication et mention de la délivrance du brevet: **23.02.2011**
(21) Numéro de dépôt: 05292566.6
(22) Date de dépôt: 05.12.2005
(51) Int. Cl.: H01M 8/02

(54) **Plaque bipolaire pour pile à combustible**
Bipolarplatte für Brennstoffzelle
Bipolar plate for fuel cell

(30) Priorité: 16.12.2004 FR 0413391
(43) Date de publication de la demande: 21.06.2006
(73) Titulaire: SNECMA, 75015 Paris (FR)
(72) Inventeur: Garceau, Patrick, 27950 St Pierre d'Autils (FR)
(74) Mandataire: Desormiere, Pierre-Louis

(56) Documents cités:
- WO-A-02/075893
- WO-A-2004/102709
- DE-A1- 10 159 007
- GB-A- 2 400 973
- US-B1- 6 635 378
- PATENT ABSTRACTS OF JAPAN vol. 1998, no. 11, 30 septembre 1998 (1998-09-30) & JP 10 172594 A (TOKYO GAS CO LTD), 26 juin 1998 (1998-06-26)

## Description

### Domaine de l'invention

La présente invention concerne les piles à combustible et plus particulièrement les plaques distributrices appelées "plaques bipolaires" et qui sont destinées à alimenter les électrodes de la pile en réactif.

### Arrière plan de l'invention

Les piles à combustible comprennent typiquement un ensemble de cellules élémentaires chacune constituée de deux électrodes (anode et cathode) séparées par une membrane jouant le rôle d'électrolyte et assemblées les unes aux autres en série pour former un empilement également appelé "stack". En alimentant chaque électrode avec un réactif approprié, à savoir un combustible pour l'une et un comburant pour l'autre, on obtient une réaction électrochimique qui permet de créer une différence de potentiel entre les électrodes et donc de produire du courant électrique. Cet empilement correspond au coeur de la pile à combustible puisque c'est dans celui-ci que va se produire la réaction électrochimique qui va permettre de générer le courant électrique.

Afin d'alimenter chaque électrode en réactif, on utilise des éléments d'interface spécifiques que l'on appelle généralement "plaques bipolaires" et qui sont disposés de chaque côté des cellules élémentaires.

Ces plaques bipolaires se présentent généralement sous la forme d'un composant unique accolé au support d'anode ou de cathode. Les fluides sont distribués au sein de l'empilement en général par deux paires de canaux disposées sur chaque face de la plaque, chaque paire assurant l'alimentation et le retour ou l'évacuation de la fraction inerte du fluide considéré. Des perçages réalisés dans l'épaisseur des plaques assurent l'alimentation et l'évacuation locale des paires de canaux qui s'étendent suivant une forme en serpentin de manière à couvrir l'intégralité de la surface active de la cellule élémentaire. Des exemples de telles plaques sont notamment décrits dans le document FR 03 12718.

WO 2004/102709 décrit une plaque bipolaire pour pile à combustible, ladite plaque étant formée de deux demi-plaques assemblées l'une contre l'autre par leur face interne. Chaque demi-plaque comprend sur sa face interne deux ouvertures d'écoulement espacées l'une de l'autre, et sur sa face externe une pluralité de canaux de distribution les deux ouvertures comprenant une pluralité d'orifices débouchant à plusieurs des extrémités des canaux de distribution.

Cependant, ce type de plaque bipolaire a été conçu pour la distribution de réactifs purs. En effet, la principale préoccupation est de fournir une quantité suffisante de réactif pour alimenter la totalité de chaque canal de distribution. L'utilisation de réactifs purs engendre un coût de fonctionnement important pour la pile à combustible et pose des problèmes de stockage pour les réactifs et en particulier en ce qui concerne l'hydrogène.

On cherche par conséquent à développer des piles à combustible qui fonctionnent avec des fluides réactifs plus économiques et plus simples à utiliser. Ces fluides réactifs sont en général des mélanges gazeux contenant, pour le combustible, une fraction d'hydrogène et, pour le comburant, une fraction d'oxygène. Ces fractions varient typiquement de 20 à 100%, les autres constituants étant majoritairement de l'azote, du gaz carbonique et de la vapeur d'eau. Par exemple, dans la plupart des applications aérobies, la production de l'hydrogène est obtenue par reformage d'un hydrocarbure ou d'un gaz naturel, ce qui correspond à un mélange gazeux contenant typiquement 40% d'hydrogène, les 60% restants étant essentiellement de l'azote et du gaz carbonique. Le mélange gazeux utilisé comme comburant est en général de l'air, soit 21% d'oxygène, 78% d'azote et 1% de gaz rares.

Toutefois, lorsqu'on utilise de tels mélanges gazeux avec les plaques bipolaires mentionnées ci-dessus, la fraction de combustible ou de comburant contenu dans le mélange gazeux utilisé décroît tout au long de son trajet dans le canal de distribution et peut être entièrement consommée avant la fin du canal. Par conséquent, avec les plaques bipolaires décrites ci-dessus et conçues pour des réactifs purs, il n'est pas possible d'assurer une distribution homogène d'espèce réactive sur toute la surface utile de la membrane, ce qui affecte le rendement global de la pile et sa durée de vie.

### Objet et résumé de l'invention

La présente invention a pour but de proposer une conception de plaque bipolaire pour pile à combustible qui permet une distribution suffisante et homogène de l'espèce réactive (combustible/comburant) lorsqu'on utilise un mélange gazeux ne contenant qu'une fraction de gaz réactif, et ce sans diminuer la surface active de distribution de la plaque.

Ce but est atteint du fait que, conformément à l'invention, la plaque bipolaire est constituée de deux demi-plaques assemblées l'une contre l'autre par leur face interne, chaque demi-plaque comprenant sur sa face interne au moins une première gorge et une deuxième gorge espacées l'une de l'autre et sur sa face externe une pluralité de canaux de distribution. Les première et deuxième gorges présentent une pluralité d'orifices débouchant respectivement à chacune des extrémités des canaux de distribution. La plaque bipolaire ainsi formée par l'assemblage des deux demi-plaques comprend quatre gorges qui s'étendent sous les faces externes de ladite plaque bipolaire comprenant chacune la pluralité de canaux de distribution.

Ainsi, avec la conception de plaque bipolaire selon l'invention, il est possible d'avoir des plaques bipolaires qui comportent un plus grand nombre de canaux par rapport aux plaques bipolaires conventionnelles. En augmentant le nombre de canaux ménagés sur la face externe de chaque demi-plaque; on diminue en proportion la longueur du trajet à parcourir par le flux gazeux de réactif. Ces canaux peuvent être réduits jusqu'à une longueur correspondant à la distance entre les deux gorges (trajet le plus direct). On peut alors adapter la longueur des canaux de distribution à la richesse en réactif du mélange gazeux utilisé. Avec de telles plaques bipolaires, il n'est plus obligatoire de recourir à des flux fortement concentrés en réactif ou à un accroissement des débits gazeux.

En outre, dans la plaque bipolaire selon l'invention, les gorges d'alimentation et d'évacuation des canaux de distribution, qui doivent être relativement larges pour conserver une section suffisante malgré la faible épaisseur des demi-plaques, sont ménagées sur les faces internes des demi-plaques. De cette façon, les risques de pertes de maintien de la membrane sur laquelle les faces externes des demi-plaques viennent en appui sont évités.

Selon un aspect de l'invention, les première et deuxième gorges de chaque demi-plaque présentent une section qui décroît progressivement à partir d'une ouverture de la demi-plaque avec laquelle elle communique. Cette forme de gorge permet d'adapter la décroissance du débit de fluide dans la gorge entre l'entrée de la gorge et les orifices les plus éloignés de celle-ci. Elle permet aussi d'optimiser la disposition des gorges dans la plaque bipolaire lors de la réunion des demi-plaques. Les première et deuxième gorges de chaque demi-plaque peuvent par exemple présenter une forme sensiblement triangulaire inversée l'une par rapport à l'autre.

Dans le cas de plaques de longueur relativement importantes, les gorges peuvent présenter une forme de deux triangles opposés qui se rejoignent par leur extrémité de rétrécissement au niveau de la moitié de la plaque, les extrémités opposées des deux triangles formant deux entrées distinctes d'alimentation pour la gorge. On dispose ainsi de deux entrées pour une même gorge qui permettent d'introduire une quantité plus importante de fluide.

Selon un aspect de l'invention, chaque demi-plaque comprend sur sa face interne une pluralité de canaux disposés entre les première et deuxième gorges, les canaux des deux demi-plaques coopérant entre eux pour former une pluralité de conduits de circulation pour un fluide de refroidissement.

Les demi-plaques peuvent être en matériau métallique tel que de l'inox ou de l'aluminium, éventuellement recouvert d'un revêtement anticorrosion. Les demi-plaques sont maintenues l'une contre l'autre par un brasage ou par un collage conducteur.

Les demi-plaques peuvent toutefois être aussi fabriquées à partir d'un matériau non métallique et maintenues l'une contre l'autre par un collage conducteur.

Les demi-plaques peuvent être en outre maintenues l'une contre l'autre par une force de serrage exercée par les moyens de serrage de l'empilement de la pile. L'étanchéité entre deux demi-plaques est alors assurée par un joint maintenu dans une gorge usinée sur la face interne de la demi-plaque.

Les deux demi-plaques constituant la plaque bipolaire selon l'invention peuvent être identiques, ce qui rationalise encore les coûts de fabrication, ou bien être différentes pour s'adapter à la distribution de deux fluides de concentration différente.

L'invention a également pour objet une pile à combustible comprenant au moins une cellule élémentaire formée d'une première et seconde électrodes séparées par une membrane (électrolyte) disposée entre deux plaques bipolaires telles que décrites précédemment. La pile à combustible peut être du type du type à membrane échangeuse de protons (PEMFC).

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels:
- les figures 1A et 1B sont respectivement des vues côté face interne et côté face externe d'un mode de réalisation d'une demi-plaque conformément à l'invention,
- la figure 2 est une vue en coupe partielle selon le plan de coupe II de la figure 1A,
- la figure 3 est une vue en coupe partielle selon le plan de coupe III de la figure.1B,
- la figure 4 est une vue en perspective de deux demi-plaques avant assemblage de la plaque bipolaire conformément à l'invention,
- la figure 5 est une vue en perspective d'une plaque bipolaire obtenue après assemblage des deux demi-plaques de la figure 4,
- les figures 6A à 6D sont des vues de détail agrandies respectivement des parties VIA à VID de la plaque bipolaire de la figure 5,
- la figure 7 est une vue schématique en perspective d'une structure pour pile à combustible comprenant des plaques bipolaires selon l'invention,
- la figure 8 est une vue côté face interne d'une demi-plaque équipée d'un joint d'étanchéité conformément à l'invention.

### Description détaillée d'un mode de réalisation

La présente invention propose une conception de plaque bipolaire qui permet une distribution homogène de gaz réactif notamment dans le cas où on utilise un mélange gazeux qui ne comprend qu'une fraction de ce gaz réactif comme c'est le cas par exemple avec l'air (source d'oxygène) ou avec un gaz reformat (source d'hydrogène). Pour compenser l'appauvrissement en réactif d'un mélange gazeux par rapport à un gaz pur de réactif, l'invention propose des plaques bipolaires qui comportent un plus grand nombre de canaux de distribution en comparaison avec les plaques bipolaires connues. La longueur des canaux peut ainsi être diminuée en proportion du nombre de canaux ménagés sur la plaque bipolaire. En réduisant la longueur des canaux, on réduit la distance à parcourir par le mélange gazeux et, par conséquent, le taux d'appauvrissement du mélange en réactif avant la sortie des canaux. La distance de chaque canal est déterminée en fonction de la concentration en réactif présent dans le mélange gazeux utilisé, c'est-à-dire que cette distance est déterminée pour que le réactif présent dans le mélange gazeux ne soit pas totalement consommé avant la fin de son parcours le long de la surface active de l'électrode. Comme décrit plus loin en détail, la plaque bipolaire selon l'invention répond à ces besoins sans pour autant dégrader la surface active et l'encombrement de la plaque bipolaire ainsi que la perte de charge du circuit hydraulique et la qualité de maintien de la membrane.

L'invention s'applique de préférence mais non nécessairement à une pile à combustible du type à membrane échangeuse de protons (PEMFC).

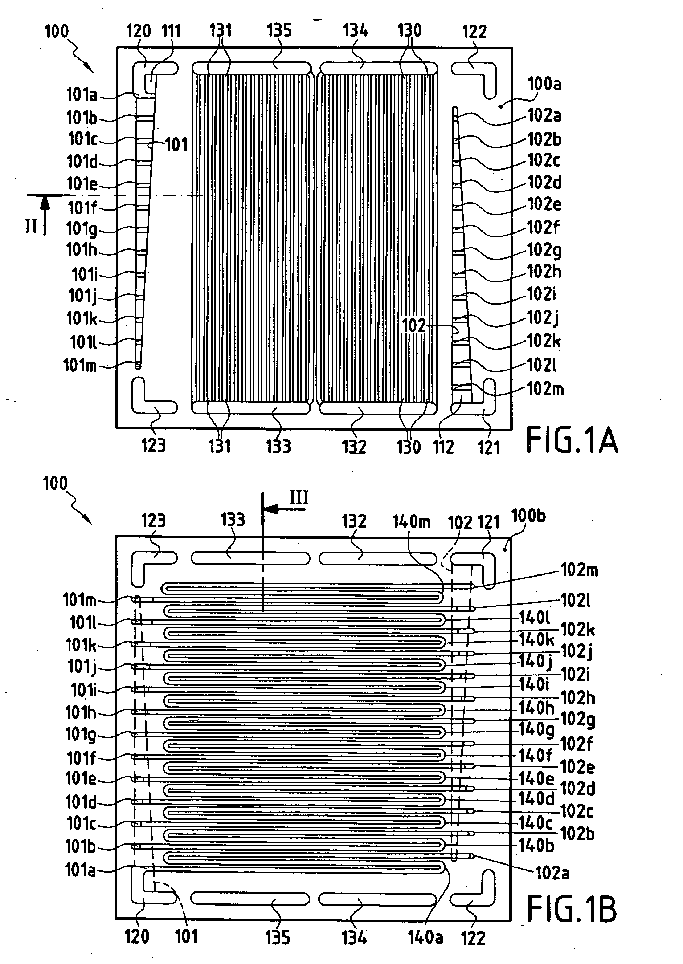

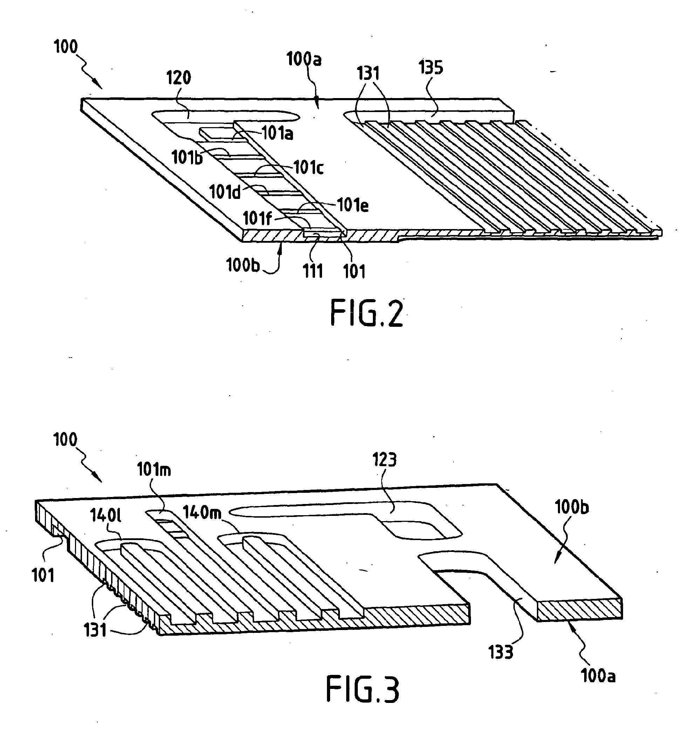

La plaque bipolaire selon la présente invention est réalisée par assemblage de deux demi-plaques. Les figures 1A, 1B, 2 et 3 montrent un mode de réalisation d'une demi-plaque qui est utilisée pour réaliser la plaque bipolaire selon l'invention. La figure 1A illustre une demi-plaque 100 du côté de sa face interne 100a, c'est-à-dire la face qui viendra en regard de l'autre demi-plaque lors de la formation de la plaque bipolaire. La demi-plaque 100 comprend sur sa face interne 100a des première et seconde gorges 101 et 102 disposées chacune au voisinage d'un bord opposé de la demi-plaque et débouchant respectivement dans des ouvertures 120 (figure 2) et 121, une première série de canaux 130 débouchant dans des ouvertures 132 et 134 et une deuxième série de canaux 131 débouchant dans des ouvertures 133 et 135 (figure 2), les deux séries de canaux 130 et 131 étant disposées entre les deux gorges 101 et 102. Le fond 111 de la gorge 101 présente une pluralité d'orifices 101a à 101m uniformément répartis sur toute la longueur de la gorge. De même, le fond 112 de la gorge 102 présente une pluralité d'orifices 102a à 102m uniformément répartis le long de cette gorge.

Les figures 1B et 3 illustrent la demi-plaque 100 du côté de sa face externe 100b, à savoir la face destinée à venir en appui contre la membrane d'une cellule élémentaire dans la pile à combustible. La demi-plaque 100 comprend sur sa face externe 100b une pluralité de canaux de distribution 140a à 140m. Ces canaux sont destinés à alimenter une électrode de la cellule en réactif et s'étendent sur une zone (surface utile) correspondant sensiblement à la surface active de la membrane de la cellule sur laquelle le réactif doit être diffusé. Chaque canal de distribution relie respectivement un orifice de la gorge 101 avec un orifice de la gorge 102. Sur la figure 1B, chaque canal de distribution 140a à 140m relie respectivement chaque orifice 101a à 101m de la gorge 101 à chaque orifice 102a à 102m de la gorge 102. Les canaux de distribution 140a à 140m forment ainsi une pluralité de canaux de distribution parallèles qui comprennent chacun leurs propres orifices d'injection et d'évacuation de fluide. En d'autres termes, chaque demi-plaque selon l'invention comprend une gorge d'alimentation et une gorge d'évacuation de réactif en liaison avec des canaux de distribution parallèles par des orifices propres à chaque canal de distribution.

Dans le mode de réalisation illustré sur la figure 1B, chaque canal de distribution comprend trois portions rectilignes entre un orifice d'entrée et un orifice de sortie. Toutefois, conformément à l'invention, il est possible de réaliser des canaux de distribution qui comporte une seule portion entre l'orifice d'entrée et l'orifice de sortie ou encore cinq portions ou plus.

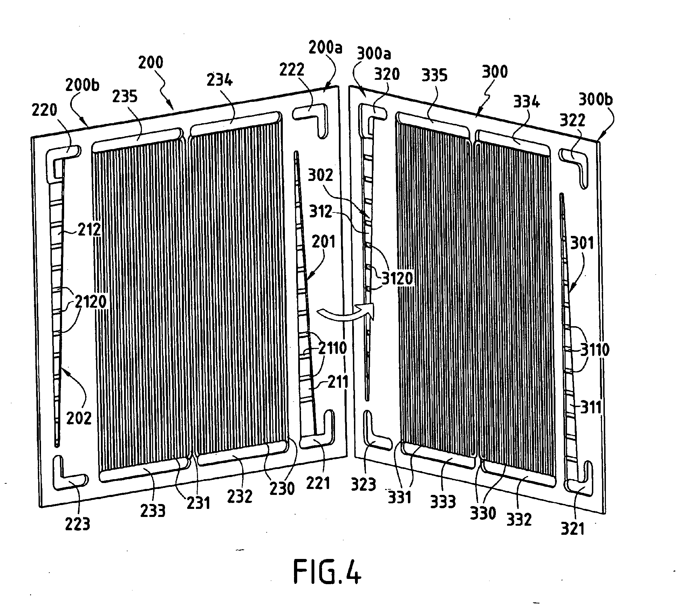

La figure 4 illustre l'assemblage de deux demi-plaques qui permet d'obtenir la plaque bipolaire selon l'invention. La figure 4 représente deux demi-plaques 200 et 300 d'une structure similaire à celle de la demi-plaque décrite en relation avec les figures 1A, 1B, 2 et 3. Aussi, tout comme la demi-plaque 100 décrite précédemment, chaque demi-plaque 200, respectivement 300, présente sur sa face interne 200a, respectivement 300a, des première et seconde gorges 201 et 202, respectivement 301 et 302 débouchant dans des ouvertures 220 et 221, respectivement 320 et 321. Le fond 211, respectivement 311, de la gorge 201, respectivement 301, présente une pluralité d'orifices 2110, respectivement 3110 uniformément répartis sur toute la longueur de la gorge. De même, le fond 212, respectivement 312, de la gorge 202, respectivement 302, présente une pluralité d'orifices 2120, respectivement 3120, uniformément répartis le long de cette gorge.

Les demi-plaques 200 et 300 comprennent également une première série de canaux 230 et 330 débouchant respectivement dans des ouvertures 232, 234 et 332, 334 et une deuxième série de canaux 231 et 331 débouchant respectivement dans des ouvertures 233, 235 et 333, 335.

Comme illustré sur la figure 4, une plaque bipolaire selon l'invention est obtenue en assemblant les deux demi-plaques 200 et 300 l'une contre l'autre par leurs faces internes 200a et 300a. Dans le mode de réalisation considéré ici, les deux demi-plaques sont identiques et chaque gorge d'une demi-plaque va être fermée par la partie de surface pleine de l'autre demi-plaque disposée en regard. Toutefois, la plaque bipolaire selon l'invention peut être formée avec des demi-plaques qui présentent une structure différente. C'est le cas par exemple lorsque la concentration en réactif des mélanges gazeux distribuée sur les deux faces externes de la plaque bipolaire est différente. Dans ce cas, on adaptera le nombre et la longueur des canaux de distribution indépendamment pour chaque demi-plaque en fonction de la concentration en réactif du mélange gazeux qui doit être distribué.

Comme illustré sur la figure 4, les gorges 201, 202, 301 et 302 présentent une forme triangulaire. L'utilisation de gorges de forme triangulaire ou équivalente à section évolutive dans les demi-plaques conformément à l'invention permet de répondre à plusieurs problèmes en même temps. En effet, les gorges des deux demi-plaques qui sont destinées à être situées à proximité l'une de l'autre (sur la figure 4 les gorges 201 et 302 d'une part et, d'autre part, les gorges 202 et 301) présentent des formes complémentaires optimisant ainsi l'espace nécessaire sur chaque demi-plaque pour former les gorges. Par ailleurs, une telle forme permet d'avoir une section de gorge qui se resserre progressivement entre le début de la gorge par lequel on introduit le flux à distribuer et son extrémité. Le flux contenant le réactif introduit au début de la gorge est alors accéléré en continu jusqu'à l'extrémité de la gorge, ce qui permet de limiter la perte de charge et de distribuer une quantité de flux sensiblement homogène à chaque orifice de la gorge même pour ceux qui sont éloignés de l'entrée de la gorge.

A la différence des gorges, les canaux 230, 231 et 330, 331 viennent en regard les uns des autres et coopèrent pour former des canaux de circulation de fluide refroidissement.

Les demi-plaques de la présente invention peuvent être fabriquées à partir de feuilles de matériau métallique tel que de l'inox ou de l'aluminium recouvert éventuellement d'un revêtement final anticorrosion (ex. dépôt chimique de nickel). Les feuilles utilisées et, par conséquent, les demi-plaques ont une épaisseur réduite par rapport aux plaques connues de l'art antérieur. Les demi-plaques de l'invention peuvent avoir par exemple une épaisseur comprise entre 1 et 1,5 mm. On obtient ainsi des plaques bipolaires de faible épaisseur qui permettent de répondre aux exigences de réduction d'encombrement et de masse toujours recherchées dans les piles à combustible.

De telles épaisseurs de demi-plaques impliquent d'avoir des gorges relativement larges (quelques mm) pour compenser la limitation en profondeur de celles-ci et conserver une section globale significative. Toutefois, un tel élargissement des gorges peut conduire à une perte de maintien de la membrane au droit de la gorge, ce qui engendre des risques d'endommagement de la membrane compte tenu des sollicitations combinées de pression, température, vibrations, etc., que la pile à combustible rencontre au cours de sa vie. La rupture de la membrane peut conduire à une perte d'étanchéité entre les réactifs, ce qui affecte considérablement le fonctionnement de la pile à combustible.

Ces risques sont éliminés dans la présente invention en positionnant les gorges sur les faces internes des demi-plaques qui viennent en regard viennent en regard l'une de l'autre lors de l'assemblage d'une plaque bipolaire, c'est-à-dire les faces qui ne sont pas en contact avec la membrane.

Les ouvertures d'alimentation et d'évacuation en réactif et en fluide de refroidissement des demi-plaques (ex. ouvertures 120 à 124 et 132 à 135 de la demi-plaque 100 des figures 1A et 1B) peuvent être réalisées par poinçonnage. Les canaux de distribution de réactif (ex. canaux 140a à 1401 de la demi-plaque 100 des figures 1A et 1B) ménagés sur la face externe des demi-plaques peuvent être formés par estampage ou par usinage grande vitesse. Les canaux de circulation de fluide refroidissement (ex. canaux 130 et 131 de la demi-plaque 100 des figures 1A et 1B) ménagés sur la face interne des demi-plaques peuvent être formés par estampage ou par usinage grande vitesse. Enfin, les gorges d'alimentation ou d'évacuation de réactif (ex. gorges 101 et 102 de la demi-plaque 100 des figures 1A et 1B) ménagées sur la face interne des demi-plaques peuvent être formées par usinage chimique ou par usinage grande vitesse.

On note que les orifices d'alimentation et d'évacuation en coopération avec les gorges (ex. orifices 101a à 101m et 102a à 102m de la demi-plaque 100 des figures 1A et 1B) sont obtenus par le croisement des usinages des gorges sur la face interne avec ceux des canaux de distribution de réactif sur la face externe, usinages dont la somme des profondeurs est supérieure à l'épaisseur de la demi-plaque.

L'assemblage de deux demi-plaques est réalisé par brasage ou par collage au moyen d'une colle conductrice.

Les demi-plaques peuvent également être réalisées avec des matériaux non métalliques tels que du graphite imprégné ou des matériaux composites à base de carbone. Dans ce cas, les demi-plaques sont obtenues par moulage ou par usinage grande vitesse. La plaque bipolaire est obtenue par collage de deux demi-plaques à l'aide d'une colle conductrice.

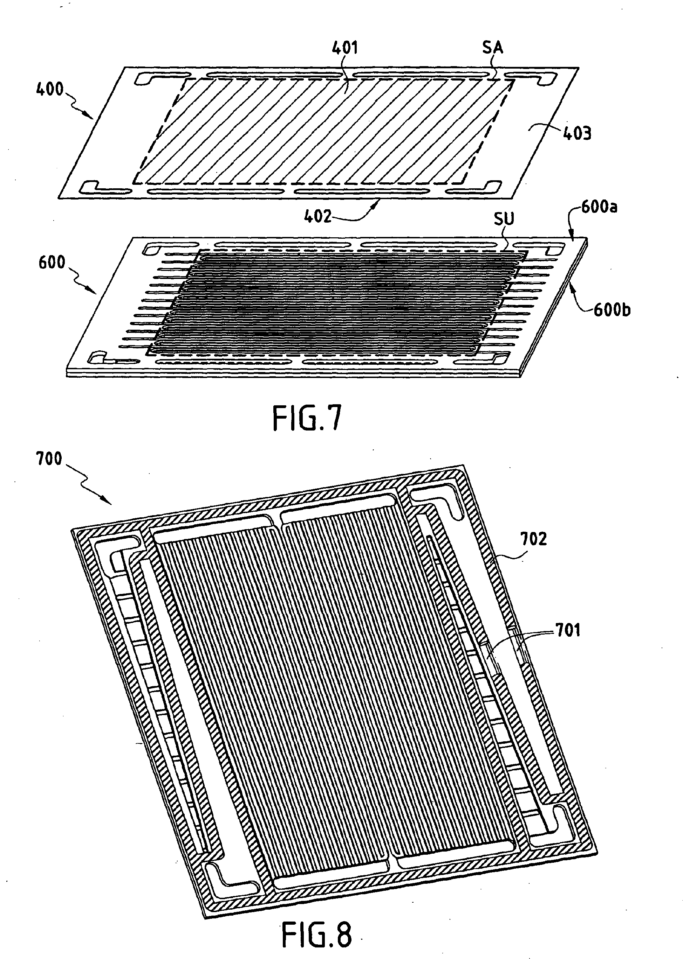

Selon encore une variante de l'invention, les demi-plaques, en matériau métallique ou non, peuvent être maintenues l'une contre l'autre par simple contact au moyen de l'effort de serrage généré dans l'empilement de la pile. En effet, de façon bien connue dans une pile à combustible, on utilise des moyens de serrage pour maintenir tous les éléments de l'empilement (plaques bipolaires, cellules élémentaires,...) en contact les uns des autres avec une force prédéterminée. Dans ce cas, l'étanchéité entre deux demi-plaques est assurée à la fois par la force de contact et par un joint interposé entre les demi-plaques. La figure 8 illustre un exemple de réalisation d'une demi-plaque 700 équipée d'un joint d'étanchéité 702 qui peut être par exemple en élastomère. Le joint 702 est en partie logé dans une gorge 701 usinée sur la surface interne de la plaque 700. La partie du joint qui dépasse de la gorge 701 se logera dans une gorge correspondante usinée sur l'autre demi-plaque destinée à être assemblée avec la demi-plaque 700.

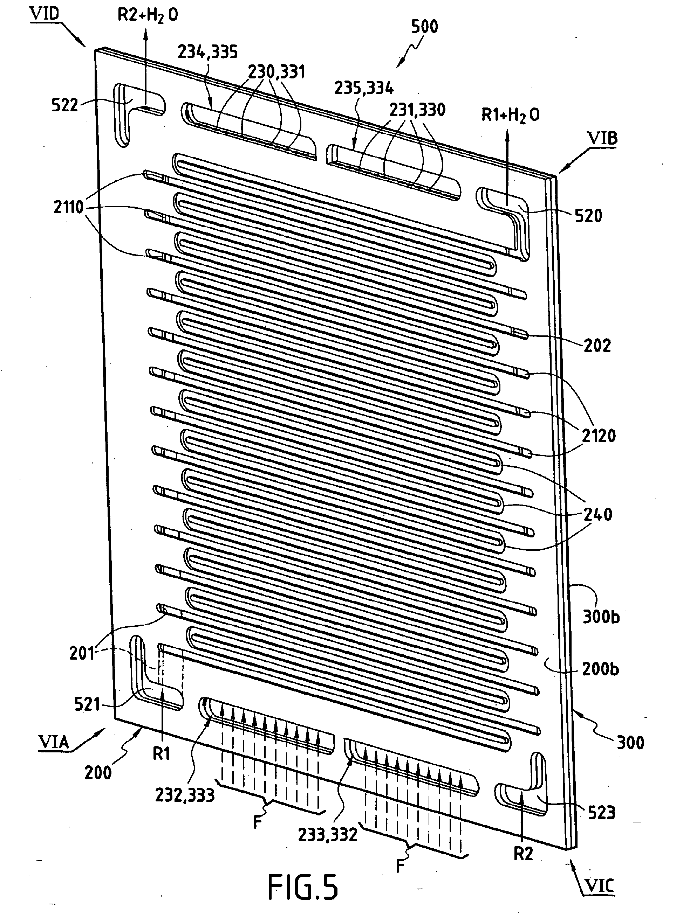

La figure 5 montre une plaque bipolaire 500 qui est obtenue après assemblage des deux demi-plaques 200 et 300 de la figure 4. La plaque bipolaire 500 ainsi constituée comporte une première face visible sur la figure 5 qui correspond à la face externe 200b de la demi-plaque 200 et qui comporte une pluralité de canaux de distribution 240 chacun reliant un orifice de la pluralité d'orifices 2110 de la gorge 201 à un orifice de la pluralité d'orifice 2120 de la gorge 202. L'autre face de la plaque bipolaire 500 (non visible sur la figure 5) correspond à la face externe 300b de la demi-plaque 300 qui comporte de la même façon une pluralité de canaux de distribution chacun reliant un orifice de la pluralité d'orifices 3110 de la gorge 301 à un orifice de la pluralité d'orifice 3120 de la gorge 302 (cf. figure 4). Ainsi, chaque face de la plaque bipolaire 500 peut distribuer et évacuer un fluide indépendamment de l'autre face.

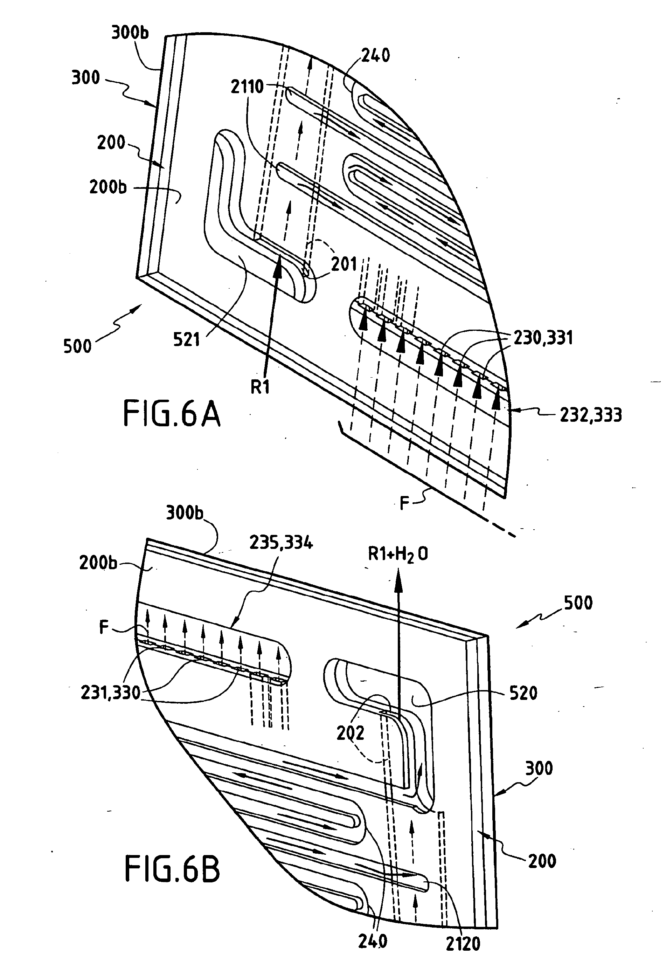

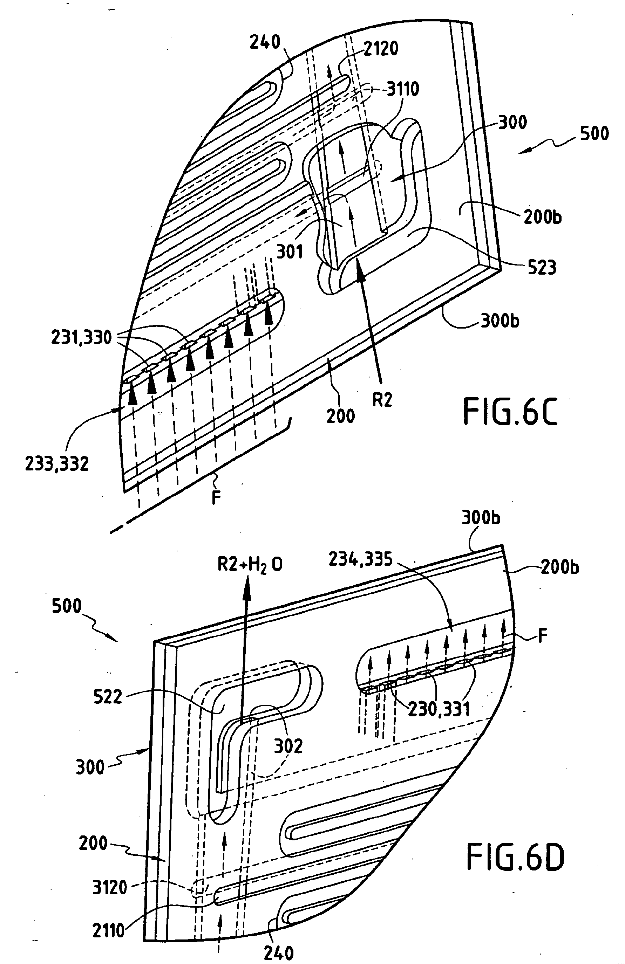

Sur la face 200b illustrée sur la figure 5, la gorge 201 est alimentée en un réactif R1 par l'ouverture 521 avec laquelle elle communique, l'ouverture 521 étant formée par la réunion des ouvertures 221 et 323 des demi-plaques 200 et 300. Chacun des canaux 240 reçoit une fraction du réactif R1 via les orifices 2110 comme illustré sur la figure 6A. Chaque fraction du réactif R1 circule en parallèle dans les canaux 240. Le réactif en excès ainsi que l'eau éventuellement produite lors de la réaction électrochimique rentrent ensuite dans les orifices 2120 et sont évacués par la gorge 202 vers l'ouverture 520 (réunion des ouvertures 220 et 322 des demi-plaques 200 et 300) comme montré sur la figure 6B. Une circulation similaire d'un réactif R2 est réalisée sur la face 300b de la plaque bipolaire 500 en alimentant la gorge 301 par l'ouverture 523 (réunion des ouvertures 223 et 321 des demi-plaques 200 et 300) tel qu'illustré sur la qu'illustré sur la figure 6C et en évacuant le réactif en excès et l'eau éventuellement produite par la gorge 301 et l'ouverture 522 (réunion des ouvertures 222 et 320 des demi-plaques 200 et 300) comme illustré sur la figure 6D.

Lorsque les deux demi-plaques 200 et 300 sont assemblées l'une contre l'autre, les canaux 230 et 231 présents sur la face interne 200a de la demi-plaque 200 coopèrent respectivement avec les canaux 331 et 330 présents sur la face interne 300a de la demi-plaque 300 pour former des conduits de circulation internes dans la plaque bipolaire 500 dans lesquels on peut faire circuler un fluide refroidissement. La forme, le nombre et la disposition des conduits de circulation internes peuvent varier notamment en fonction du degré de refroidissement que l'on souhaite obtenir.

La figure 7 montre un exemple d'une structure de pile à combustible comprenant des plaques bipolaires conformément à l'invention. Afin de ne pas alourdir la présentation de l'invention, l'assemblage illustré en figure 7 correspond à la structure ou empilement minimum qui peut être réalisé pour former le coeur d'une pile à combustible, à savoir une cellule élémentaire 600 et une plaque bipolaire 400 identique à celle représentée sur la figure 5 et qui ne seront pas décrites à nouveau pour ne pas alourdir inutilement la présente description. Toutefois, une pile à combustible selon l'invention peut évidemment comprendre plusieurs fois cette structure. Par ailleurs, lorsque la structure de la figure 7 correspond à une extrémité de l'empilement, on dispose seulement une plaque monopolaire de l'autre côté de la cellule élémentaire, c'est-à-dire une plaque qui ne distribue du réactif que sur sa face en regard de la cellule.

La structure présentée sur la figure 7 est formée d'une cellule élémentaire 400 comprenant une première électrode 401 et une seconde électrode 402 séparées par une membrane 403 qui joue le rôle d'électrolyte, par exemple une membrane polymère échangeuse de protons utilisée dans les piles de type PEMFC. Ces éléments sont assemblés entre eux et se présentent sous la forme d'un même composant unique (EME) incluant des joints d'étanchéité (non représentés). Cette partie de la structure de la pile à combustible est bien connue en soi et ne sera pas décrite plus en détail. La présente invention peut être mise en oeuvre avec tout type de cellule élémentaire.

Pour que la réaction électrochimique se produise, chacune des électrodes 401, 402 de la cellule 400 doit être alimentée avec un réactif différent, à savoir un combustible pour l'une, par exemple un fluide réactif contenant de l'hydrogène, et un comburant pour l'autre, par exemple de l'air.

L'électrode 402 est alimentée en un premier réactif par les canaux de distribution 640 présents sur la face 600a de la plaque bipolaire 600 de la même manière que décrit précédemment en détail en relation avec la figure 5 et les figures 6A et 6B. De même, l'électrode 401 est alimentée en un second réactif par les canaux de distribution d'une plaque bipolaire de l'ensemble suivant plaque bipolaire/cellule élémentaire ou par les canaux de distribution d'une plaque monopolaire si on se trouve à une extrémité de l'empilement. Les canaux de distribution présents sur chaque face externe des plaques bipolaires s'étendent sur une surface utile SU qui correspond sensiblement à la surface active SA de la membrane de la cellule 400. On voit ici que la plaque bipolaire selon l'invention permet de distribuer sur chacune de ses faces un fluide à travers un plus grand nombre de canaux en parallèle sans dégrader notablement le rapport entre la surface active de la membrane et la surface utile des plaques bipolaires. Cela est notamment du au fait que dans les plaques bipolaires de l'invention les gorges et les orifices d'alimentation/évacuation des canaux de distribution sont disposés de façon optimisée à l'extérieur et au-dessous de la zone utile de la plaque.

Lorsque les plaques présentent une longueur importante dans le sens des gorges, il se peut qu'une seule entrée d'alimentation pour les gorges soit insuffisante notamment pour celles destinés à alimenter les canaux de distribution en combustible. En effet, à partir d'une certaine longueur de gorges et suivant le taux de concentration en réactif contenu dans le mélange gazeux utilisé, il y a un risque que les canaux de distribution les plus éloignés de l'entrée de la gorge ne reçoivent pas ou trop peu de réactif, ce qui nuit à l'homogénéité de distribution du réactif.

Dans ce cas, les gorges peuvent présenter une forme de section évolutive qui est symétrique par rapport à un axe situé au milieu de la plaque. De telles gorges peuvent par exemple présenter la forme de deux triangles opposés qui se rejoignent par leur extrémité de rétrécissement au niveau de la moitié de la plaque, les extrémités opposées des deux triangles formant deux entrées distinctes d'alimentation pour la gorge.

## Revendications

1. Plaque bipolaire pour pile à combustible, ladite plaque étant formée de deux demi-plaques (100) assemblées l'une contre l'autre par leur face interne (100a), **caractérisé en ce que** chaque demi-plaque comprend sur sa face interne (100a) une première gorge et une deuxième gorge (101, 102) espacées l'une de l'autre, et sur sa face externe (100b) une pluralité de canaux de distribution (140a-140m), les première et deuxième gorges (101, 102) présentant une pluralité d'orifices (101a-101m, 102a-102m) débouchant respectivement à chacune des extrémités des canaux de distribution (140a-140m) et **en ce que** la plaque bipolaire ainsi formée par l'assemblage des deux demi-plaques comprend quatre gorges (201, 202, 301, 302) qui s'étendent sous les faces externes de ladite plaque bipolaire comprenant chacune la pluralité de canaux de distribution.

2. Plaque selon la revendication 1, **caractérisée en ce que** les première et deuxième gorges (101, 102) de chaque demi-plaque présentent une section qui décroît progressivement à partir d'une ouverture (120; 121) de la demi-plaque avec laquelle elle communique.

3. Plaque selon la revendication 2, **caractérisée en ce que** les première et deuxième gorges (101, 102) de chaque demi-plaque présentent une forme sensiblement triangulaire inversée l'une par rapport à l'autre.

4. Plaque selon la revendication 2, **caractérisée en qu'**au moins une des première et deuxième gorges présente une forme de deux triangles opposés qui se rejoignent par leur extrémité de rétrécissement au niveau de la moitié de la plaque, les extrémités opposées des deux triangles formant deux entrées distinctes d'alimentation pour la gorge.

5. Plaque selon l'une quelconque des revendications 1 à 4, **caractérisée en ce qu'**au moins une demi-plaque (100) comprend sur sa face interne (100a) une pluralité de canaux (130, 131) disposés entre les première et deuxième gorges (101, 102), les canaux des deux demi-plaques coopérant entre eux pour former une pluralité de conduits de circulation pour un fluide de refroidissement.

6. Plaque selon l'une quelconque des revendications 1 à 5, **caractérisée en ce que** les demi-plaques (100) sont en matériau métallique.

7. Plaque selon la revendication 6, **caractérisée en ce que** les demi-plaques sont maintenues l'une contre l'autre par un brasage ou par un collage conducteur.

8. Plaque selon l'une quelconque des revendications 1 à 5, **caractérisée en ce que** les demi-plaques (100) sont en matériau non métallique.

9. Plaque selon la revendication 8, **caractérisée en ce que** les demi-plaques sont maintenues l'une contre l'autre par un collage conducteur.

10. Plaque selon l'une quelconque des revendications 1 à 6 et 8, **caractérisée en ce que** chaque demi-plaque (700) comprend sur sa face interne une gorge (701) formant un logement pour un joint (702) de manière à assurer l'étanchéité entre les deux demi-plaques sous un effort de serrage.

11. Plaque selon l'une quelconque des revendications 1 à 10, **caractérisée en ce que** les deux demi-plaques (100) sont identiques.

12. Pile à combustible, **caractérisée en ce qu'**elle comprend au moins une cellule élémentaire (400) formée d'une première et seconde électrodes (401, 402) séparées par un électrolyte (403) disposée entre deux plaques selon l'une quelconque des revendications 1 à 11.

13. Pile selon la revendication 12, **caractérisé en ce qu'**elle est du type à membrane échangeuse de protons (PEMFC).

## Claims

1. A bipolar plate for a fuel cell, said plate being made up of two half-plates (100) assembled one against the other via their inside faces (100a), the plate being **characterized in that** each half-plate comprises on its inside face (100a) one first groove and one second groove (101, 102) spaced apart from each other, and on its outside face (100b) a plurality of distribution channels (140a-140m), the first and second grooves (101, 102) presenting a plurality of orifices (101a-101m, 102a-102m) opening out respectively into each of the ends of the distribution channels (140a-140m), and **in that** the bipolar plate as formed in this way by assembling the two half-plates together has four grooves (201, 202, 301, 302) that extend under the outside faces of said bipolar plate, each comprising a plurality of distribution channels.

2. A plate according to claim 1, **characterized in that** each of the first and second grooves (101, 102) in each half-plate presents a section that decreases progressively from an opening (120; 121) in the half-plate with which it communicates.

3. A plate according to claim 2, **characterized in that** the first and second grooves (101, 102) of each half-plate present respective substantially triangular shapes that are reversed relative to each other.

4. A plate according to claim 2, **characterized in that** at least one of the first and second grooves presents a shape in the form of two oppositely-directed triangles meeting via their narrow ends in the middle of the plate, the opposite ends of the two triangles forming two sot feed inlets for the groove.

5. A plate according to any one of claims 1 to 4, **characterized in that** at least one half-plate (100) includes in its inside face (100a) a plurality of channels (130, 131) disposed between the first and second grooves (101, 102), the channels of the two half-plates co-operating with one another to form a plurality of flow ducts for a cooling fluid.

6. A plate according to any one of claims 1 to 5, **characterized in that** the half-plates (100) are made of metal.

7. A plate according to claim 6, **characterized in that** the half-plates are held one against the other by brazing or by a conductive adhesive.

8. A plate according to any one of claims 1 to 5, **characterized in that** the half-plates (100) are made of non-metallic material.

9. A plate according to claim 8, **characterized in that** the half-plates are held one against the other by conductive adhesive.

10. A plate according to any one of claims 1 to 6 and 8, **characterized in that** each half-plate (700) includes in its inside face a groove (701) forming a housing for a gasket (702) so as to provide sealing between the two half-plates under a clamping force.

11. A plate according to any one of claims 1 to 10, **characterized in that** the half-plates (100) are identical.

12. A fuel cell, **characterized in that** it includes at least one individual cell (400) formed by first and second electrodes (401, 402) separated by an electrolyte (403) disposed between two plates according to any one of claims 1 to 11.

13. A fuel cell according to claim 12, **characterized in that** it is of the proton exchange membrane type (PEMFC).

## Patentansprüche

1. Bipolarplatte für Brennstoffzelle, wobei die Platte von zwei halben Platten (100) gebildet ist, die mit ihrer Innenseite (100a) aneinandergefügt sind, **dadurch gekennzeichnet, daß** jede halbe Platte auf ihrer Innenseite (100a) eine erste Nut und eine zweite Nut (101, 102), welche voneinander beabstandet sind, sowie auf ihrer Außenseite (100b) eine Vielzahl von Verteilungskanälen (140a-140m) aufweist, wobei die erste und die zweite Nut (101, 102) eine Vielzahl von Öffnungen (101a-101m, 102a-102m) aufweisen, die jeweils an jedem der Enden der Verteilungskanäle (140a-140m) ausmünden, und daß die auf diese Weise durch Aneinanderfügen der beiden halben Platten gebildete Bipolarplatte vier Nuten (201, 202, 301, 302) umfaßt, die unter den Außenseiten der Biopolarplatte verlaufen, die jeweils die Vielzahl von Verteilungskanälen umfassen.

2. Platte nach Anspruch 1, **dadurch gekennzeichnet, daß** die erste und die zweite Nut (101, 102) einer jeden halben Platte einen Querschnitt aufweisen, der ausgehend von einer Öffnung (120; 121) der halben Platte, mit der sie in Verbindung steht, schrittweise abnimmt.

3. Platte nach Anspruch 2, **dadurch gekennzeichnet, daß** die erste und die zweite Nut (101, 102) einer jeden halben Platte eine im wesentlichen dreieckige, zueinander umgekehrte Form aufweisen.

4. Platte nach Anspruch 2, **dadurch gekennzeichnet, daß** wenigstens eine der ersten und zweiten Nuten eine Form von zwei entgegengesetzten Dreiecken aufweist, die mit ihren Verjüngungsenden im Bereich der Hälfte der Platte zusammentreffen, wobei die gegenüberliegenden Enden der beiden Dreiecke zwei getrennte Versorgungseingänge für die Nut bilden.

5. Platte nach einem der Ansprüche 1 bis 4, **dadurch gekennzeichnet, daß** wenigstens eine halbe Platte (100) auf ihrer Innenseite (100a) eine Vielzahl von Kanälen (130, 131) aufweist, die zwischen der ersten und der zweiten Nut (101, 102) angeordnet sind, wobei die Kanäle der beiden halben Platten zusammenwirken, um eine Vielzahl von Zirkulationsleitungen für ein Kühlfluid zu bilden.

6. Platte nach einem der Ansprüche 1 bis 5, **dadurch gekennzeichnet, daß** die halben Platten (100) aus einem metallischen Material bestehen.

7. Platte nach Anspruch 6, **dadurch gekennzeichnet, daß** die halben Platten durch ein Löten oder durch ein leitendes Kleben aneinander gehalten sind.

8. Platte nach einem der Ansprüche 1 bis 5, **dadurch gekennzeichnet, daß** die halben Platten (100) aus einem nichtmetallischen Material bestehen.

9. Platte nach Anspruch 8, **dadurch gekennzeichnet, daß** die halben Platten durch ein leitendes Kleben aneinander gehalten sind.

10. Platte nach einem der Ansprüche 1 bis 6 und 8, **dadurch gekennzeichnet, daß** jede halbe Platte (700) auf ihrer Innenseite eine Nut (701) aufweist, die eine Aufnahme für eine Dichtung (702) bildet, um die Dichtigkeit zwischen den beiden halben Platten unter einer Klemmkraft sicherzustellen.

11. Platte nach einem der Ansprüche 1 bis 10, **dadurch gekennzeichnet, daß** die beiden halben Platten (100) identisch sind.

12. Brennstoffzelle, **dadurch gekennzeichnet, daß** sie wenigstens eine Elementarzelle (400) umfaßt, die von einer ersten und einer zweiten Elektrode (401, 402), die durch einen Elektrolyt (403) getrennt sind, gebildet ist und zwischen zwei Platten nach einem der Ansprüche 1 bis 11 angeordnet ist.

13. Zelle nach Anspruch 12, **dadurch gekennzeichnet, daß** sie vom Typ Brennstoffzelle mit Protonen-Austausch-Membran (PEMFC) ist.
